# EUROPEAN PATENT SPECIFICATION

(11) **EP 1 888 239 B1**
(45) Date of publication and mention of the grant of the patent: **01.10.2014**
(21) Application number: 06743975.2
(22) Date of filing: 23.05.2006
(51) Int. Cl.: B01L 7/00, B01L 3/00, G06K 19/077, C12M 1/00, C12M 1/38

(54) **APPARATUS FOR COMMUNICATING WITH A MEMORY TAG AND USE OF THE SAME**
VORRICHTUNG ZUR KOMMUNICATION MIT EINEM SPEICHERETIKETT UND VERWENDUNG DERSELBEN
APPAREIL DE COMMUNICATION AVEC UN MARQUEUR DE MEMOIRE ET UTILISATION DE CELUI-CI

(30) Priority: 24.05.2005 WO PCT/GB2005/002048; 24.05.2005 EP 05076393
(43) Date of publication of application: 20.02.2008
(60) Divisional application: 10010999.0
(73) Proprietor: Research Instruments Limited, Falmouth, Cornwall TR11 4TA (GB)
(72) Inventor: LANSDOWNE, David, Charles, Flushing Cornwall TR11 5TP (GB)
(74) Representative: Akers, Noel James
(86) International application number: PCT/GB2006/001898
(87) International publication number: WO 2006/125980

(56) References cited:
- EP-A- 1 484 816
- WO-A-00/65137
- WO-A-01/94016
- WO-A-02/46361
- WO-A-02/081743
- WO-A-2004/003131
- WO-A-2004/026661
- WO-A-2005/095576
- DE-U1- 20 121 738
- US-A- 5 552 321
- US-A- 5 674 742
- US-A- 6 156 566
- US-A1- 2002 068 358

## Description

A first aspect of the invention relates to apparatus for communicating with a memory tag (such as an RFID tag) via a wireless electromagnetic link. The apparatus is typically (although not exclusively) for the identification of temperature-controlled samples, such as biological samples for use in in-vitro fertilisation processes. A second aspect of the invention provides apparatus for providing a temperature-controlled surface.

In-vitro fertilisation is a process which is intended to enable a woman, apparently unable to conceive naturally, to gestate and give birth by implantation, in the womb, of an externally-fertilised egg. During the process, unfertilised eggs are collected from the patient's ovaries and admixed with sperm from the woman's partner for fertilisation purposes, the fertilised egg then being re-implanted in the womb for gestation. Clearly, it is important for the procedure to be administered under a rigorous and carefully-controlled protocol to ensure that the eggs are fertilised with sperm from the intended partner; various instances have been reported in the media concerning unintended and highly distressing errors which become apparent following birth. To this end, the Human Fertilisation and Embryology Authority operates a so-called "locked in process", in which the procedure is witnessed at every stage by a person additional to the operative to ensure, as far as possible, that mistakes such as have been made in the past are not repeated in the future. The procedure is consequently expensive to operate and administer and, in any event, the possibility of human error cannot entirely be eliminated.

Accordingly, there is a need to provide a procedure and associated apparatus which enables samples to be coded and identified, especially for use in in-vitro fertilisation procedures, in a way which falls within the requirements of the regulatory authorities, in the UK this being the Human Fertilisation and Embryology Authority.

In particular, there is a need to provide an apparatus that gives the person conducting the in-vitro fertilisation procedures a secure zone, such as a sterile cabinet or working area. In this respect, the term 'secure zone' is to mean a space in which tagged or labeled items entering or leaving any part of the space are identified and logged.

EP 1 484 816 discloses an antenna for reader/writer and an apparatus incorporating the antenna. The apparatus relies upon RFID that is operable even when in contact with a conductive surface. The apparatus comprises an antenna coil disposed on a soft magnetic member, which in turn is in contact with a metal surface, such as a casing. The apparatus of EP 1 484 816, while operable as a reader/writer, has only a low read range, that is objects bearing an RFID tag or label must be in very close proximity to the antenna. In the handling of in-vitro fertilisation procedures, it is necessary to operate within a space, such as a sterile cabinet or the like. It is not feasible or practical for all the labeled objects to be in close proximity to the antenna. Accordingly, the system of EP 1 484 816 does not address the needs of the in-vitro fertilisation procedures.

US 2002/0068358 discloses an in-vitro embryo culture device. The device serves as an incubator for a single embryo. The device incorporates a heater, to regulate the temperature of an embryo contained within the device. A base assembly is provided, which allows the status and condition of an embryo to be determined and monitored, when the device is placed on the base assembly. This document discloses nothing which assists with providing a secure zone for in-vitro fertilisation procedures, as hereinbefore described.

US 2005/0007296 discloses an antenna coil and an RFID-use tag incorporating the antenna. The tag is provided with the antenna in the form of a helical coil. As with EP 1 484 816, the antenna coil is operable only at very short distances, resulting in the device having a very low read range. Again, this device is not suitable to provide a secure zone for use in conducting in-vitro fertilisation procedures, as discussed hereinbefore.

A method and system for controlling the development of biological entities is disclosed in WO 2004/003131.

WO 00/65137 discloses a microelectromechanical device useful for manipulating cells or embryos, kits thereof, methods of making the same and method of use thereof.

DE 201 21 738 concerns an identifiable carrier for use in multiple parallel processing of samples, for example, biological sample storage.

Accordingly, there remains a need for a method and system for providing a secure zone for the accurate monitoring of tagged or labeled samples, in particular biological samples, during procedures for handling the samples, such as in-vitro fertilisation procedures. It would also be very useful if the secure zone could include means for controlling the ambient or working temperature within the zone without such means interfering with the accurate monitoring of the tagged or labeled samples.

In a first aspect, the present invention provides a work station as defined in claim 1 appended hereto. The work station comprises a surface for supporting a sample; a temperature controller for controlling the temperature of the surface; and an antenna for communicating with a memory tag via a wireless electromagnetic link, the antenna being located beneath the surface in order to communicate with a memory tag on or over the surface; and a soft magnetic member.

The work station is for communicating with a memory tag via a wireless electromagnetic link, and may comprise an antenna coil which has an inner edge defining an antenna axis and a coil interior; and a soft magnetic member which, when viewed along the antenna axis, overlaps with some, but not all, of the coil interior.

The work station provides a secure zone for conducting procedures using tagged or labeled items, such as in-vitro fertilisation procedures, whereby such items moved into and out of the region surrounding the work station or apparatus are detected, without the need for the operator to bring each item into close proximity to the antenna.

The work station comprises a plate for supporting a sample; a temperature controller for controlling the temperature of the plate; and an antenna for communicating with a memory tag via a wireless electromagnetic link, the antenna being located beneath the plate in order to communicate with a memory tag on or over the plate; wherein the plate is thermally conducting from one face to the other, and the temperature controller is in thermal contact with a lower face of the plate.

The work station may comprise a thermally conducting plate having a chamber containing a liquid in thermal contact with the plate; a pump for pumping the liquid into the chamber; an inlet channel between the pump and the chamber; and an inlet weir extending across the inlet channel so as to impede the flow of liquid through the inlet channel into the chamber.

Preferred and further features of the work station of the aforementioned aspect of the present invention are recited in the accompanying claims.

In still a further aspect, the present invention provides a method for coding and identification of biological samples for in-vitro fertilisation, as recited in claim 13 appended hereto, the method comprising the steps of identifying receptacles intended for unfertilised eggs and sperm, respectively, with an identification code characteristic of the patient; placing unfertilised eggs and sperm, respectively, in the receptacles; storing, transporting and admixing the respective samples in receptacles which each carry the same code; and implanting the resulting embryo in the patient. The identification codes are computer-readable, via a reader, and information relating to the vessels and the samples stored therein is maintained in a database which tracks the vessels and samples and can provide information concerning their location at any given time.

The identification code is based on RFID technology, in which sample vessels are identified by the application of write-on or printable adhesive labels having an RFID tag permanently attached thereto or incorporated therein, identification being by means of activation by radiation in the form of radio frequency waves, the tag emitting identification signals which can be received by the reader and stored in the database. The database is controlled by software which includes an anti-collision protocol to discriminate between data received from a plurality of vessels having different identification codes attached thereto.

In this specification, the term "vessels" is intended to cover vessels for use at any stage of the overall in-vitro fertilisation procedure between initial collection of the egg and sperm samples, storage thereof, admixing thereof for fertilisation purposes and transmission of the embryo to the patient for implantation. Also In this specification, the term "patient" is to be understood, as the context requires, as applying either to the woman or to the male partner.

In operation of the process and as reassurance for the patient, the patient can observe and verify that the initial samples are placed in vessels which correctly identifies the patient and that the embryo is also thus identified.

The method of the invention is preferably carried out on a laboratory bench, beneath which is located an antenna for transmission of activation radiation and receiving signals emitted by the RFID tag. It is necessary, in order for the samples to remain viable, for the bench surface to be heated to a controlled temperature, preferably in the range of from 37 to 42°C. When handling or manipulating samples using conventional techniques, bench surfaces are typically made from stainless steel. Heating thereof is by means of pipes disposed under and spaced from the bench top and through which hot water is circulated. A heat-conductive plate, typically of aluminium or an aluminium alloy, is provided between the pipes and the surface material to equilibrate the temperature differences between the pipes and their surroundings and result in a substantially uniform surface temperature. However, with the method of the present invention, signals between the antenna and samples will not transmit through a metal bench top, nor will they communicate with an RFID tag in close proximity, typically 1 mm or less, to a metal surface. It is therefore necessary to utilise an electrically non-conducting material for the bench top, but this mitigates against the use of temperature control measures which rely on thermal conduction from beneath the surface.

The reading means comprises an antenna and a reader for reading RFID tags. The antenna forms part of an electrical circuit that is configured to optimise the reading of RFID tags on or over the surface. The circuit includes a transformer for providing power to the antenna and also an adjustable capacitor and an adjustable reservoir. The transformer is configured to minimise any impedance mismatch between the reader and the antenna to improve the prospect of an RFID tag being readable on or over the entire surface. The adjustable capacitor is set to tune to resonance the coupling between the antenna and the RFID tag over the surface. The adjustable resistor is set to dampen the magnetic field that the antenna produces over the surface so that RFID tags placed over the surface are not 'swamped'.

The work station provides a warmed surface for supporting biological samples and comprising RFID tag reading means located beneath the surface for reading RFID tags on or over the surface, wherein the station is structured such that warming of the surface is achieved without preventing reading by the reading means of an RFID tag associated with an item placed on the surface.

In one embodiment, the work station comprises a work area defined by an electrically-insulating or resistive plate beneath which, in use, is located an antenna for transmitting electromagnetic signals to sample receptacles placed on the work area and receiving identification signals therefrom, in which the plate is thermally conducting from one face to the other, the lower surface being in thermal contact with a temperature-controlled heating medium. The work area may be set in a workbench, which may be made, for example, from stainless steel, the work area providing a secure zone, that is a discrete working zone for the antenna and manipulation operations carried out on the upper surface.

The plate may comprise glass coated on its lower surface with an electrically-conducting heating layer, such as indium tin oxide, as the heating medium. Alternatively, the plate may comprise upper and lower plate elements defining a cavity between them for containing a liquid heating medium, for example water, at a thermostatically-controlled temperature. Preferably, the water is pumped and recirculated through the cavity at a sufficiently high flowrate to minimise the temperature drop across the work area. Preferably, the flow of the liquid heating medium is laminar.

Embodiments of invention will now be described by way of example with reference to the accompanying drawings, in which:
Figure 1 is a diagrammatic view of a work station utilising one form of heating means;
Figure 2 is a diagrammatic view of another embodiment using another form of heating means;
Figure 3 is an isometric view of the upper side of a table-top work station;
Figure 4 shows upper side of the table-top work station with the housings removed;
Figure 5 is an isometric view of the underside of the table-top work station;
Figure 6 shows the underside of the table-top work station with the lower plate removed;
Figure 7 shows the underside of the upper plate only;
Figure 8 shows the underside of the lower plate only;
Figures 9-11 show the underside of the upper plate with various different configurations of soft magnetic strips; and
Figure 12 is a cross-sectional side view of an embodiment of the workstation of the present invention in use.

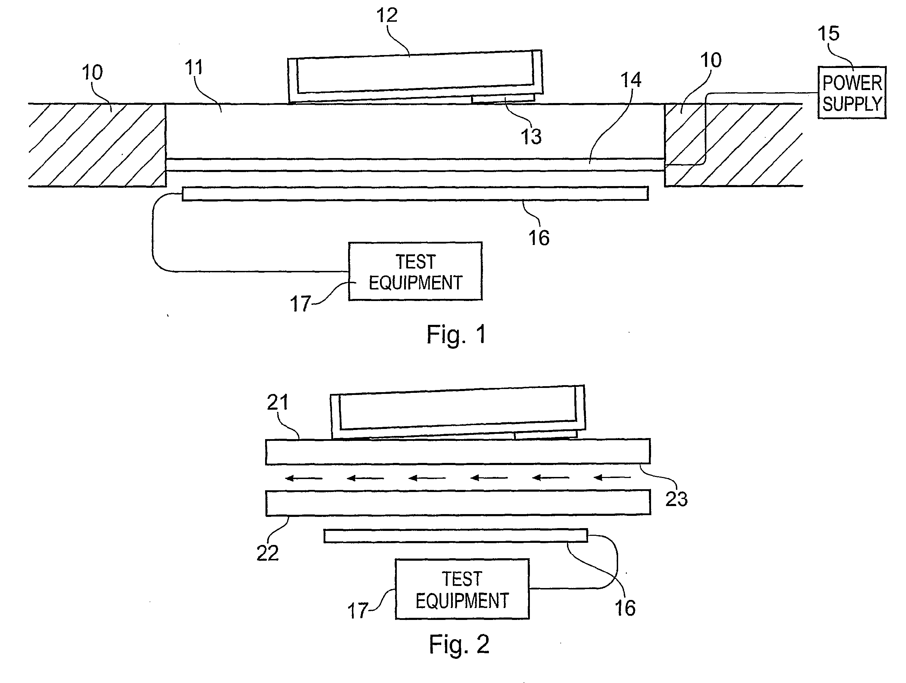

With reference firstly to Figure 1, the apparatus consists essentially of a stainless steel workbench surface (10) having an insert defining a work area and consisting of a toughened glass plate (11). A petri dish (12) having an RFID tag (13) attached to the under surface thereof is placed on the work station. The glass plate (11) carries a lower coating or deposit (14) formed from indium tin oxide, the layer being electrically connected to a power supply to provide an even heating current. An antenna (16) is disposed below the work station and connected to test equipment (17).

In use, the antenna coil transmits activation signals to the RFID tag (13) which itself transmits identification signals back to the antenna, the signals being processed in the test equipment (17). The power supply (15) supplies energy to the indium tin oxide layer (14) for heating purposes; the heat generated is transmitted through the plate (11) to maintain the upper surface of the plate at the desired temperature.

With reference to Figure 2, the work station consists essentially of upper and lower Corian (Registered Trade Mark) plates (21, 22) set into a workbench as shown in Figure 1. The plates are spaced apart to define a gap (23) through which temperature-controlled water is passed in laminar flow to maintain the upper surface of the work station at the desired temperature. The work station is provided with an antenna and test equipment as described and illustrated with reference to Figure 1.

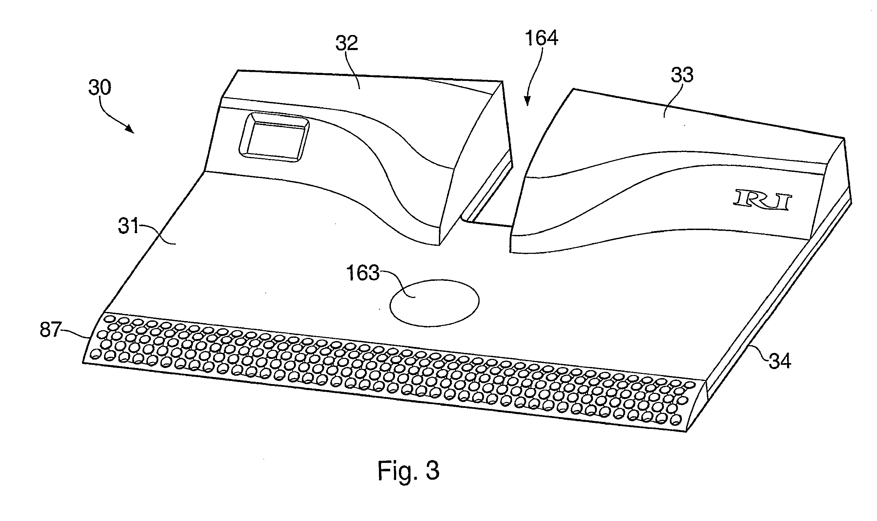

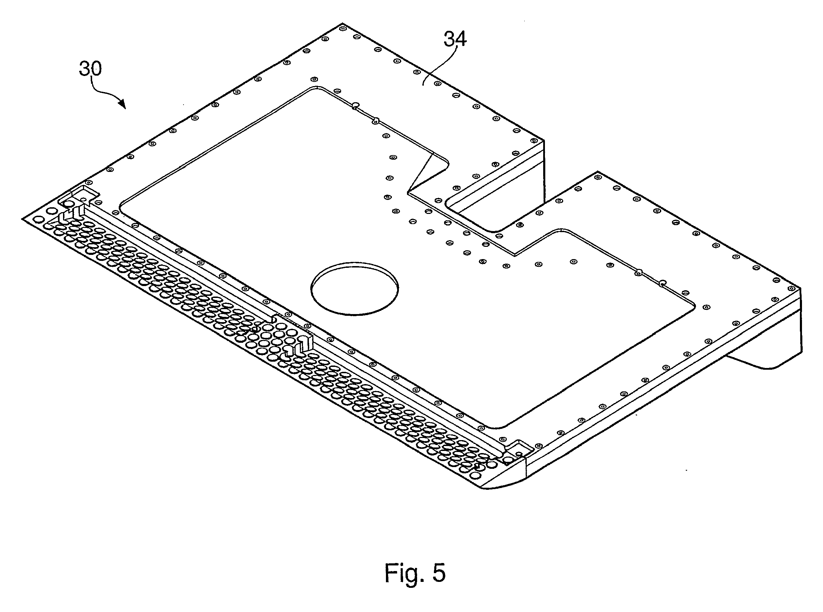

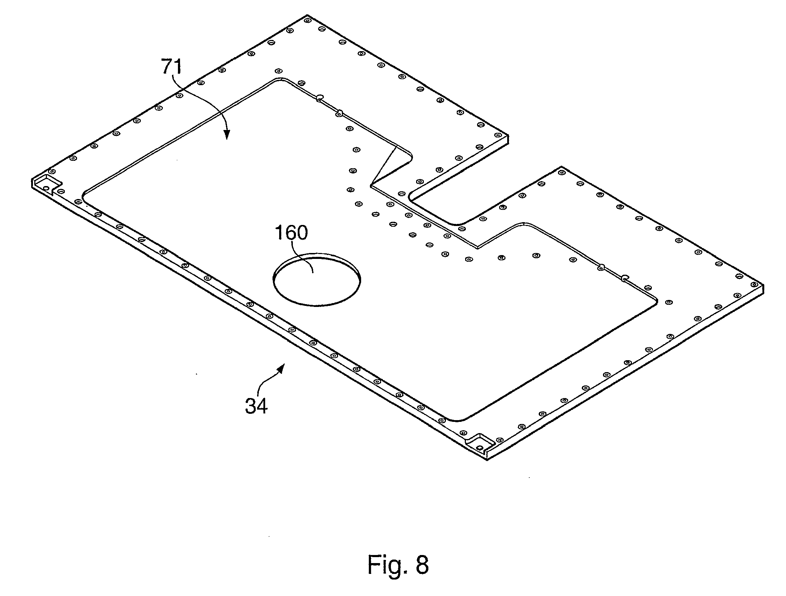

Referring to Figures 3-8, a table-top workstation 30 comprises a Corian™ upper plate 31, a pair of housings 32, 33 which are mounted to the upper plate 31, and a Corian™ lower plate 34.

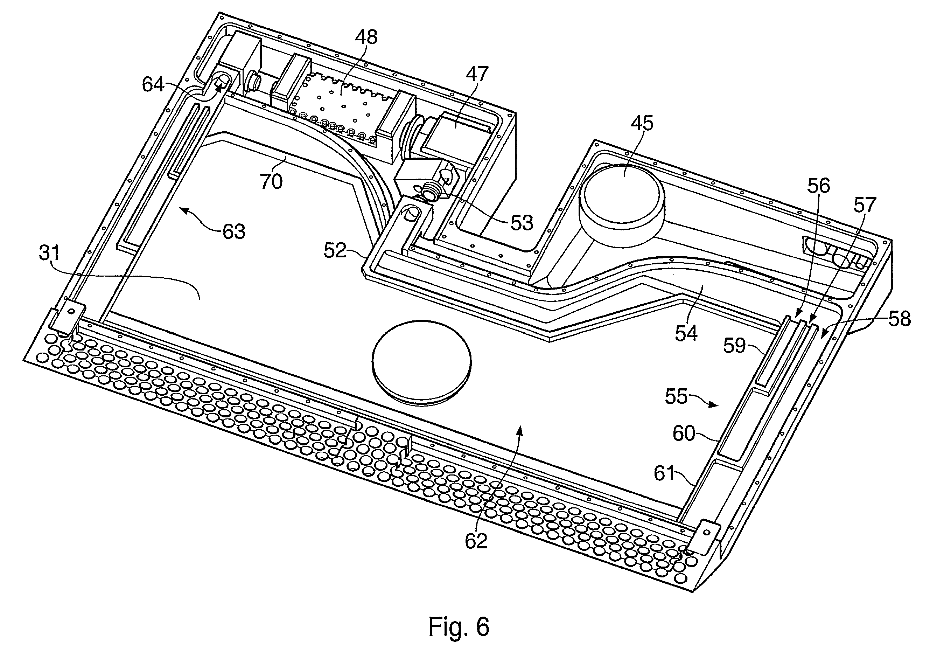

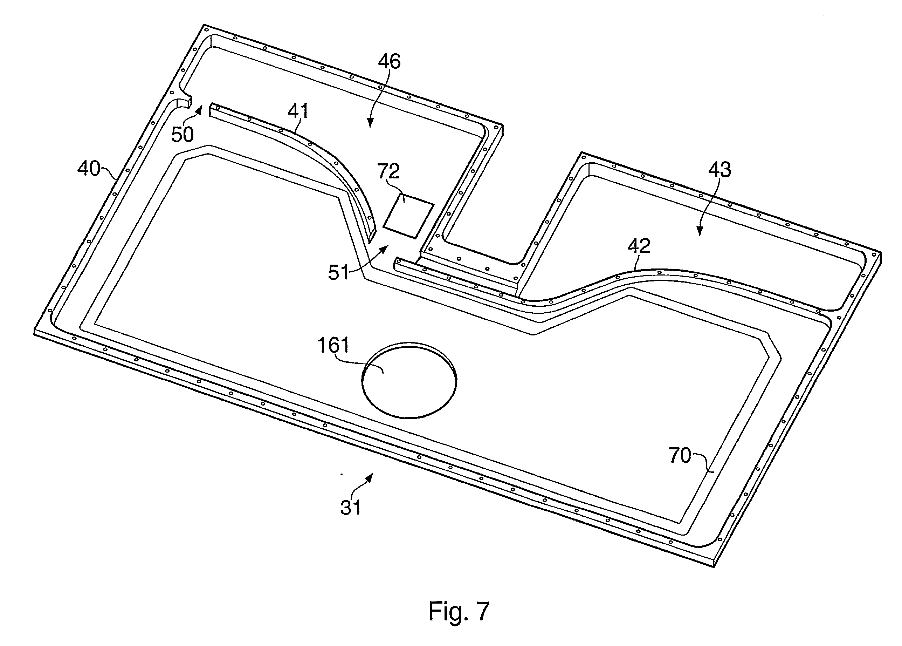

Figure 7 shows the underside of the device with the lower plate 34 removed. As shown in Figure 7, the underside of the upper plate 31 has a flange 40 running around its outer periphery, and dividers 41, 42. The flange 40 and dividers 41, 42 have holes (not labeled) which receive screws (shown in Figure 6) which screw the lower plate 34 to the upper plate 31. A space 50 is provided between the divider 41 and the flange 40, and a space 51 is provided between the divider 42 and the divider 41.

The upper plate 31 has a hole 43 which receives a display unit 44 and a transformer 45, which are mounted to the lower plate 34.

The upper plate 31 also has a hole 46 which receives a water pump 47 and an Aluminium heater block 48, also mounted to the lower plate 34. Wires (not shown) connect the pump 47 to the transformer 45, which provides power to the pump.

A sealing block 52 fits into the space 51, and has an inlet which is connected to an outlet 53 of the pump by a pipe (not shown). The sealing block 52 channels water from the pump via a channel 54 to a water flow distribution block 55. The upper wall of the channel 54 is formed by the upper plate 31, and the lower wall of the channel 54 is formed by the lower plate 34 (not shown in Figure 6).

The flow distribution block comprises two L-shaped walls which divide the flow into three inlet channels 56-58, and three inlet weirs 59-61 which extend across the inlet channels 56-58. The inlet weirs 59-61 have a height approximately 0.3mm less than the L-shaped walls, thus impeding the flow, but providing a 0.3mm slit through which water can flow out of the inlet channels 56-58 into a main water chamber 62. The inlet channels 56-58 distribute the flow uniformly across the width (front to back) of the chamber 62, and the inlet weirs 59-61 ensure laminar flow across the width of the outlets of the inlet channels 56-58.

The water flows across the main chamber 62 and exits via a water collection block 63 which is identical to the flow distribution block 55 and therefore will not be described in detail. The water collection block 63 directs flow through an outlet 64 into the heater block 48 which is connected in turn to an inlet of the pump 47.

The flow rate is kept as high as possible to ensure that the temperature drop between the flow distribution block 55 and the water collection block 63 is as small as possible.

The lower and upper plates have circular holes 160, 161 respectively which receive respective glass windows 162, 163. A slot 164 (shown in Figure 3) receives a stereo-zoom microscope in use. Light is projected upwardly through the glass windows 162, 163 into a vessel (such as a petri dish) placed on the glass window 163, enabling the microscope to view the sample.

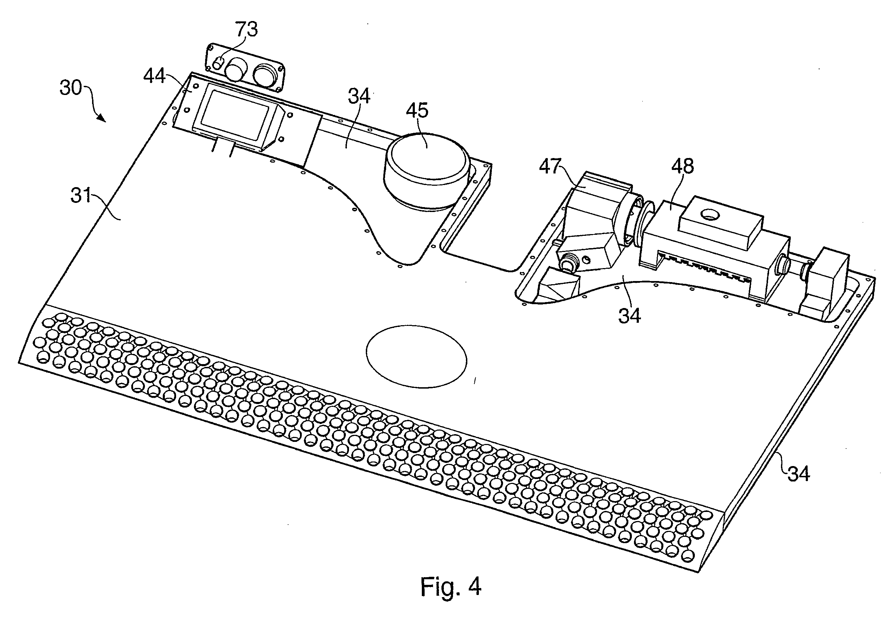

A channel 70 (which forms a closed loop) is formed in the underside of the upper plate, and receives an RFID antenna (not shown) in use. The antenna comprises a single turn of adhesive copper strip which is spray-coated with waterproof insulating material. The ends of the copper strip pass through hole 51 where they are connected to a small PCB-mounted tuning circuit 72. The tuning circuit includes an impedance matching transformer; adjustable series and parallel capacitances; and an adjustable series resistance. The adjustable capacitances and resistances enable the antenna to be tuned. A coaxial cable (not shown) connects the tuning circuit to a coaxial output port 73 shown in Figure 4.

In the embodiment shown, the antenna is placed above the water, but in an alternative embodiment (not shown) the antenna coil may be placed below the water.

The underside of the lower plate 34 has a shallow recess 71 which receives a continuous sheet of self-adhesive soft magnetic material (not shown), cut with a hole around the glass window. The material may be any of the materials described in EP-A-1484816. Preferably the material is a sheet of EMI suppression material, Product Code PE73 or PE73, provided by FDK Corporation of Tokyo, Japan. This product is chosen due to its high initial permeability.

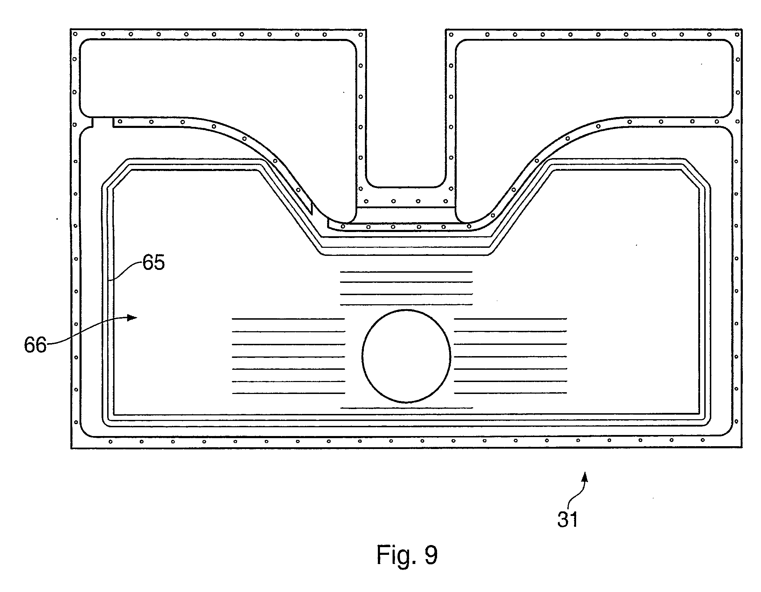

The sheet of soft magnetic material forms a shield which decouples the antenna coil from any surrounding metal work. When viewed along an antenna axis (transverse to Figures 9-11) the sheet overlaps slightly with the coil in order to maximise the shielding effect.

Strips of self-adhesive soft magnetic material are also attached to the upper plate 31. The strips may be formed from the same material as the shielding sheet mounted on the lower plate, or from a different soft magnetic material. Various patterns may be used, and examples are given in Figures 9-11. In each case, the strips are approximately 100mm long, 2 mm wide, and spaced apart by 2mm.

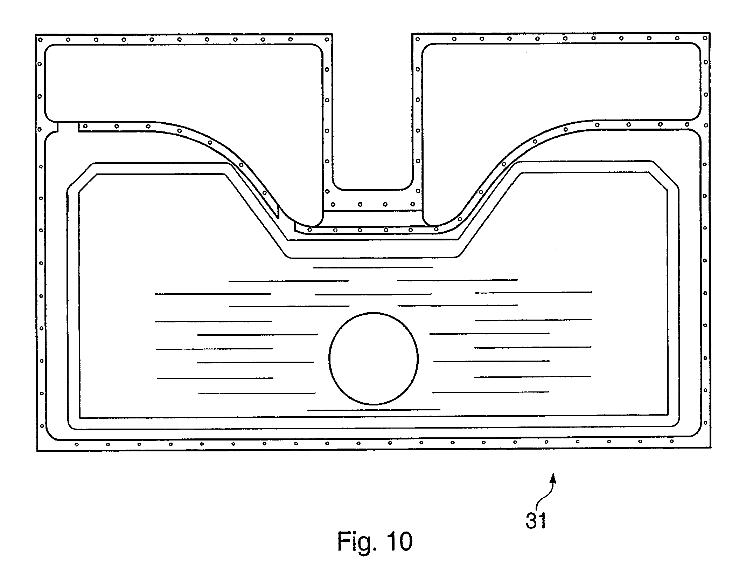

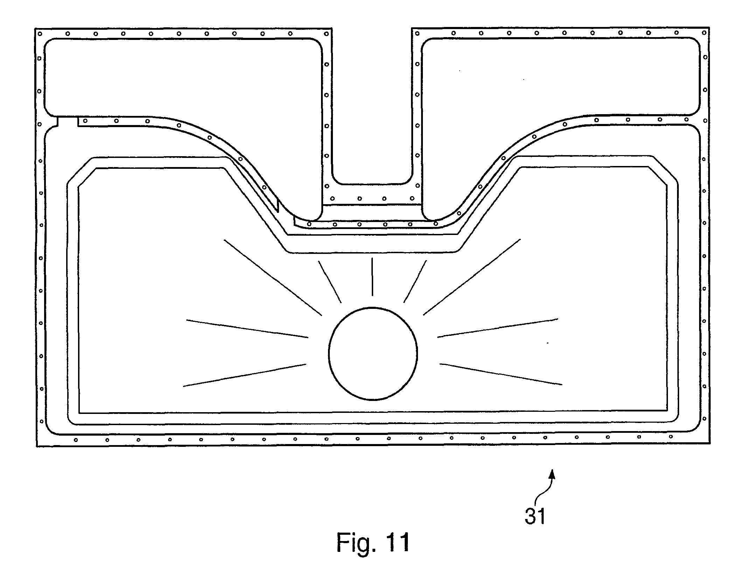

In the case of Figure 9, the strips are arranged in parallel. In the case of Figure 10, the strips are arranged in parallel in a "brickwork" pattern with successive lines of strips offset from each other. In the case of Figure 11, the strips radiate outwardly from the glass windows 62, 63.

The antenna is indicated schematically at 65. The antenna 65 has an inner edge defining an antenna axis (transverse to Figure 9) and a coil interior 66. Each strip of soft magnetic material, when viewed along the antenna axis as in the view of Figure 9, overlaps with some, but not all, of the coil interior 66. The same is true for the strips in Figures 10 and 11. The magnetic field is circular (toroidal) around the coil 65. The intensity gets weaker as the distance from the coil 65 increases. In order to obtain a more even field across the coil interior, the strips of soft magnetic material are spaced from the coil towards the centre of the coil interior. Thus, in contrast to the continuous sheet housed in the shallow recess 71 (which decouples the coil from surrounding metal work), the strips perform a different function of manipulating the magnetic field in the coil interior. The strips may lie in the same plane as the coil, or may be positioned above or below the plane of the coil.

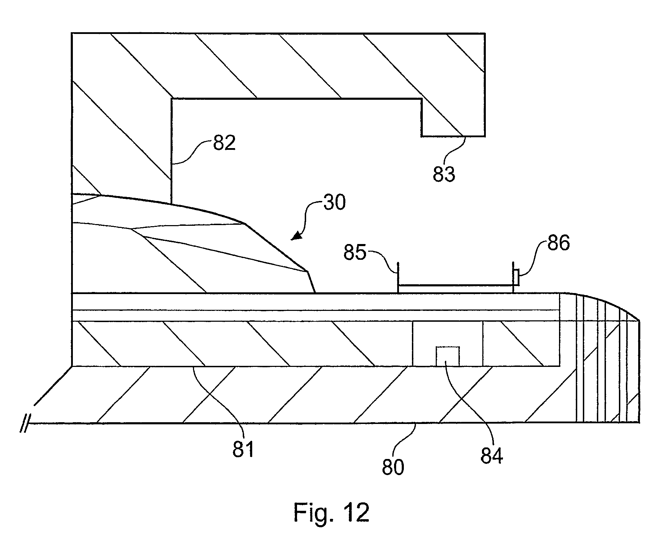

The workstation 30 is shown in use in Figure 12. A stainless steel table 80 in a ventilated cabinet (not shown) has a recess in its upper face which receives the base 81 of a microscope. The microscope has a column 82 passing through the slot 64 in the rear of the workstation 30, and head 83 positioned above the glass window 63. A lamp 84 is positioned below the glass window 62 to illuminate a sample in a vessel 85 carrying an RFID tag 86. The workstation has a removable perforated wrist-rest 87 which is positioned above a perforated region of the table 80. The perforations permit the circulation of air in the ventilated cabinet.

In an alternative embodiment (not shown), the embodiment of Figure 2 may incorporate a sheet of shielding soft magnetic material with side walls which pass between the edge of the workbench 10 and the glass plate 11, and a base which runs below the coil 16 (the shield forming a U-shape in cross-section). Strips of soft magnetic material (formed in one of the patterns shown in Figures 9-11 may be adhered to the indium tin oxide layer 14.

In an alternative embodiment (not illustrated), the heating arrangement shown in Figure 6 (employing inlet and outlet weirs) may be used to provide a temperature controlled surface in an alternative application, without incorporating an RFID reader.

In further alternative embodiments, the water, or another liquid medium, may be used to cool a sample instead of heating the sample.

## Claims

1. A work station (30) for the identification of temperature-controlled biological samples for in-vitro fertilisation processes, the work station (30) comprising a plate (11, 21, 22) for supporting a sample; a glass window (163) in the plate (11, 21, 22); means for projecting light upwardly through the glass window (163); a temperature controller for controlling the temperature of the plate; and a reading means comprising a reader and an antenna (16) for communicating with a RFID memory tag (13) via a wireless electromagnetic link, the antenna (16) being located beneath the plate (11, 21, 22) in order to communicate with a memory tag on or over the plate; wherein the plate is thermally conducting from one face to the other, and the temperature controller is in thermal contact with a lower face of the plate; the work station comprising a soft magnetic material to decouple the antenna from the surrounding metalwork; wherein the reading means arranged to communicate with a database in which identification signals emitted by the RFID memory tag (13) and received by the reader are stored, the database being controlled by software which includes an anti-collision protocol to discriminate between data received from a plurality of vessels having different identification codes attached thereto.

2. A work station (30) according to claim 1, in which the plate (11, 21, 22) comprises an electrically-insulated or resistive plate.

3. A work station according to claim 1 or 2, in which the plate comprises a glass plate (11), and the temperature controller comprises an electrically-conducting heating layer (14) provided as a coating on the lower face of the plate (11, 21, 22).

4. A work station according to claim 3, wherein the electrically-conducting heating layer (14) comprises a layer of indium tin oxide.

5. A work station according to any preceding claim, wherein the temperature-controller comprises a liquid, preferably water.

6. A work station according to claim 5, further comprising a chamber (62) containing the liquid; a pump (47) for pumping the liquid into the chamber (62); an inlet channel between the pump and the chamber; and an inlet weir (59) extending across the inlet channel so as to impede the flow of liquid through the inlet channel into the main chamber (62).

7. A work station according to claim 6 wherein the inlet weir (59) is elongated in a direction transverse to a direction of flow of water across the inlet weir (59).

8. A work station according to claim 6 or 7 further comprising one or more additional inlet channels between the pump (47) and the chamber (62); each additional inlet channel having an inlet weir (59 - 62) extending across the additional inlet channel so as to impede the flow of the liquid through the additional inlet channel into the main chamber.

9. A work station according to any of claims 6 to 8, further comprising an outlet channel; and an outlet weir extending across the outlet channel so as to impede the flow of liquid from the main chamber (62) into the outlet channel.

10. A work station according to claim 9 wherein the outlet weir is elongated in a direction transverse to a direction of flow of water across the outlet weir.

11. A work station according to any of claims 6 to 10 further comprising one or more additional outlet channels; each additional outlet channel having an outlet channel so as to impede the flow of liquid from the main chamber into the additional outlet channel.

12. The use of a work station according to any of claims 1 to 11 in coding and identification of biological samples for in-vitro fertilisation.

13. A method for coding and identification of biological samples for in-vitro fertilisation, the method comprising the steps of applying to receptacles intended for unfertilised eggs and sperm, respectively, an RFID identification code characteristic of a patient; placing unfertilised eggs and sperm, respectively in the receptacles; storing, transporting and admixing the respective samples in receptacles which each carry the same code; wherein one or more steps of the method are carried out at work station according to any of claims 1 to 11, information relating to the receptacles and samples stored therein being maintained in a database, the database being controlled by software which includes an anti-collision protocol to discriminate between data received from a plurality of vessels having different identification codes attached thereto.

## Patentansprüche

1. Arbeitsplatz (30) zum Identifizieren von temperaturgeregelten biologischen Proben für In-vitro-Fertilisationsprozesse, wobei der Arbeitsplatz (30) Folgendes aufweist: eine Platte (11, 21, 22) zum Tragen einer Probe; ein Glasfenster (163) in der Platte (11, 21, 22); ein Mittel zum Projizieren von Licht nach oben durch das Glasfenster (163); einen Temperaturregler zum Regeln der Temperatur der Platte und ein Lesemittel, das ein Lesegerät und eine Antenne (16) zur Kommunikation mit einem RFID-Speicher-Tag (13) über eine drahtlose elektromagnetische Verbindung aufweist, wobei die Antenne (16) sich unter der Platte (11, 21, 22) befindet, um mit einem Speicher-Tag auf oder über der Platte zu kommunizieren; wobei die Platte Wärme von einer Seite zur anderen leitet und der Temperaturregler mit einer Unterseite der Platte in thermischem Kontakt ist; wobei der Arbeitsplatz ein weichmagnetisches Material aufweist, um die Antenne von den umgebenden Metallteilen abzukoppeln; wobei das Lesemittel zur Kommunikation mit einer Datenbank angeordnet ist, in der vom RFID-Speicher-Tag (13) ausgestrahlte und vom Lesegerät empfangene Identifizierungssignale gespeichert werden, wobei die Datenbank von Software gesteuert wird, die ein Antikollisions-Protokoll zum Unterscheiden zwischen von mehreren Behältern, an denen verschiedene Identifikationscodes angebracht sind, empfangenen Daten beinhaltet.

2. Arbeitsplatz (30) nach Anspruch 1, bei dem die Platte (11, 21, 22) eine elektrisch isolierte oder resistive Platte umfasst.

3. Arbeitsplatz nach Anspruch 1 oder 2, bei dem die Platte eine Glasplatte (11) umfasst und der Temperaturregler eine elektrisch leitende Heizschicht (14) aufweist, die als Beschichtung auf der Unterseite der Platte (11, 21, 22) bereitgestellt ist.

4. Arbeitsplatz nach Anspruch 3, wobei die elektrisch leitende Heizschicht (14) eine Schicht aus Indiumzinnoxid aufweist.

5. Arbeitsplatz nach einem der vorhergehenden Ansprüche, wobei der Temperaturregler eine Flüssigkeit, vorzugsweise Wasser, aufweist.

6. Arbeitsplatz nach Anspruch 5, der ferner Folgendes aufweist: eine Kammer (62), die die Flüssigkeit enthält; eine Pumpe (47) zum Fördern der Flüssigkeit in die Kammer (62); einen Einlasskanal zwischen der Pumpe und der Kammer und ein Einlasswehr (59), das über den Einlasskanal verläuft, um den Flüssigkeitsfluss durch den Einlasskanal in die Hauptkammer (62) zu behindern.

7. Arbeitsplatz nach Anspruch 6, wobei das Einlasswehr (59) in einer Richtung länglich ist, die quer zu einer Strömungsrichtung von Wasser über das Einlasswehr (59) ist.

8. Arbeitsplatz nach Anspruch 6 oder 7, der ferner einen oder mehr zusätzliche Einlasskanäle zwischen der Pumpe (47) und der Kammer (62) aufweist, wobei jeder zusätzliche Einlasskanal ein Einlasswehr (59 - 62) hat, das über den zusätzlichen Einlasskanal verläuft, um den Flüssigkeitsfluss durch den zusätzlichen Einlasskanal in die Hauptkammer zu behindern.

9. Arbeitsplatz nach einem der Ansprüche 6 bis 8, der ferner einen Auslasskanal und ein über den Auslasskanal verlaufendes Auslasswehr aufweist, um den Flüssigkeitsfluss aus der Hauptkammer (62) in den Auslasskanal zu behindern.

10. Arbeitsplatz nach Anspruch 9, wobei das Auslasswehr in einer Richtung länglich ist, die quer zu einer Strömungsrichtung von Wasser über das Wehr ist.

11. Arbeitsplatz nach einem der Ansprüche 6 bis 10, der ferner einen oder mehr zusätzliche Auslasskanäle aufweist, wobei jeder Auslasskanal einen Auslasskanal [*sic*] hat, um den Flüssigkeitsfluss aus der Hauptkammer in den zusätzlichen Auslasskanal zu behindern.

12. Verwendung eines Arbeitsplatzes nach einem der Ansprüche 1 bis 11 bei Codierung und Identifizierung von biologischen Proben zur In-vitro-Fertilisation.

13. Verfahren zum Codieren und Identifizieren von biologischen Proben zur In-vitro-Fertilisation, wobei das Verfahren die folgenden Schritte umfasst: Anbringen eines einen Patienten kennzeichnenden RFID-Identifizierungscodes an für unbefruchtete Eizellen bzw. Spermien vorgesehenen Behältnissen; Geben von unbefruchteten Eizellen bzw. Spermien in die Behältnisse; Speichern, Befördern und Mischen der jeweiligen Proben in Behältnissen, die jeweils denselben Code tragen; wobei ein oder mehr Schritte des Verfahrens an einem Arbeitsplatz nach einem der Ansprüche 1 bis 11 durchgeführt werden, Informationen bezüglich der Behältnisse und darin gespeicherten Proben in einer Datenbank geführt werden, die Datenbank von Software gesteuert wird, die ein Antikollisions-Protokoll zum Unterscheiden zwischen von mehreren Behältern, an denen verschiedene Identifikationscodes angebracht sind, empfangenen Daten beinhaltet.

## Revendications

1. Station de travail (30) permettant l'identification d'échantillons biologiques à température contrôlée pour des procédures de fécondation in vitro, la station de travail (30) comprenant : une plaque (11, 21, 22) destinée à supporter un échantillon ; une fenêtre en verre (163) dans la plaque (11, 21, 22) ; des moyens pour projeter la lumière vers le haut à travers la fenêtre en verre (163); un régulateur de température permettant de régler la température de la plaque ; et un moyen de lecture comprenant un lecteur et une antenne (16) pour communiquer avec un marqueur de mémoire RFID (13) via une liaison électromagnétique sans fil, l'antenne (16) étant localisée en dessous de la plaque (11, 21, 22) afin de communiquer avec un marqueur de mémoire sur ou au-dessus de la plaque ; où la plaque est thermiquement conductrice d'une face à l'autre, et le régulateur de température est en contact thermique avec un côté inférieur de la plaque ; la station de travail comprenant un matériaux magnétique souple afin de découpler l'antenne de la pièce métallique environnante ; où le moyen de lecture est agencé de sorte à communiquer avec une base de données dans laquelle les signaux d'identification émis par le marqueur de mémoire RFID (13) et reçus par le lecteur sont mémorisés, la base de données étant commandée par un logiciel qui inclut un protocole anticollision afin de différencier entre les données reçues depuis une multitude de récipients ayant des codes d'identification différents y étant rattachés.

2. Une station de travail (30) selon la revendication 1, dans laquelle la plaque (11, 21, 22) comprend une plaque électriquement isolante ou résistive.

3. Une station de travail selon la revendication 1 ou 2, dans laquelle la plaque comprend une plaque en verre (11), et le régulateur de température comprend une couche chauffante électriquement conductrice (14) fournie en tant que revêtement sur la surface inférieure de la plaque (11, 21, 22).

4. Une station de travail selon la revendication 3, dans laquelle la couche chauffante électriquement conductrice (14) comprend une couche en oxyde double d'indium et d'étain.

5. Une station de travail selon une des revendications précédentes, dans laquelle le régulateur de température comprend un liquide, de préférence de l'eau.

6. Une station de travail selon la revendication 5, comprenant en outre une chambre (62) contenant le liquide ; une pompe (47) destinée à pomper le liquide dans la chambre (62) ; un canal d'entrée entre la pompe et la chambre ; et un dispositif de blocage d'entrée (59) s'étendant à travers le canal d'entrée afin d'empêcher l'écoulement de liquide par le canal d'entrée dans la chambre principale (62).

7. Une station de travail selon la revendication 6, dans laquelle le dispositif de blocage d'entrée (59) est allongé en une direction transversale par rapport à la direction d'écoulement d'eau à travers le dispositif de blocage d'entrée (59).

8. Une station de travail selon la revendication 6 ou 7, comprenant en outre un ou plusieurs canaux d'entrée supplémentaires entre la pompe (47) et la chambre (62) ; chaque canal d'entrée supplémentaire étant muni d'un dispositif de blocage d'entrée (59 - 62) s'étendant à travers le canal d'entrée supplémentaire afin d'empêcher l'écoulement de liquide par le canal d'entrée supplémentaire dans la chambre principale.

9. Une station de travail selon une des revendications de 6 à 8, comprenant en outre un canal de sortie; et un dispositif de blocage de sortie s'étendant à travers le canal de sortie supplémentaire afin d'empêcher l'écoulement de liquide par la chambre principale (62) dans le canal de sortie.

10. Une station de travail selon la revendication 9, dans laquelle le dispositif de blocage de sortie est allongé en une direction transversale par rapport à une direction d'écoulement d'eau à travers le dispositif de blocage de sortie.

11. Une station de travail selon une des revendications de 6 à 10, comprenant en outre un ou plusieurs canaux de sortie supplémentaires ; chaque canal de sortie supplémentaire étant muni d'un canal de sortie afin d'empêcher l'écoulement de liquide par la chambre principale dans le canal de sortie supplémentaire.

12. Utilisation de la station de travail selon une des revendications de 1 à 11 dans le codage et l'identification d'échantillons biologiques pour des procédures de fécondation in vitro.

13. Un procédé de codage et d'identification d'échantillons biologiques pour des procédures de fécondation in vitro, le procédé comprenant les étapes suivantes : attribuer respectivement un code d'identification RFID caractéristique d'un patient aux réceptacles prévus pour les ovules non fécondés et les spermatozoïdes ; placer les ovules non fécondés et les spermatozoïdes, respectivement, dans les réceptacles ; sauvegarder, transporter et mélanger les échantillons respectifs dans des réceptacles porteurs du même code ; où une ou plusieurs étapes du procédé sont effectuées au niveau de la station de travail selon une des revendications de 1 à 11, les informations concernant les réceptacles et les échantillons y étant sauvegardées sont maintenues dans une base de données, la base de données étant commandée par un logiciel qui inclut un protocole anticollision afin de différencier entre les données reçues depuis une multitude de récipients ayant des codes d'identification différents y étant rattachés.
